# FASCICULE DE BREVET EUROPEEN

(11) **EP 3 268 221 B1**
(45) Date de publication et mention de la délivrance du brevet: **27.02.2019**
(21) Numéro de dépôt: 16709386.3
(22) Date de dépôt: 09.03.2016
(51) Int. Cl.: B32B 37/00

(54) **MACHINE DE TRAITEMENT AVEC UN MODULE DE LAMINAGE**
BEHANDLUNGSMASCHINE MIT EINEM LAMINIERENDEN MODUL
TREATMENT MACHINE HAVING A LAMINATING MODULE

(30) Priorité: 12.03.2015 FR 1552044
(43) Date de publication de la demande: 17.01.2018
(73) Titulaire: Evolis, 49070 Beaucouze (FR)
(72) Inventeur: GRIMAULT, Romain, 49070 Beaucouze (FR); CHIRON, Anthony, 49070 Beaucouze (FR)
(74) Mandataire: Cabinet Le Guen Maillet
(86) Numéro de dépôt international: PCT/EP2016/055061
(87) Numéro de publication internationale: WO 2016/142440

(56) Documents cités:
- EP-A1- 2 039 525
- WO-A1-2014/022088
- US-A- 6 095 220

## Description

La présente invention concerne une machine de traitement de carte comportant un module de laminage, en particulier un module de laminage permettant de déposer un film de protection ou un vernis fixé à chaud sur une carte plastique.

Une machine de traitement de l'état de la technique permet par exemple d'imprimer sur une carte plastique et/ou d'encoder un circuit imprimé (classiquement appelé « puce ») implanté sur la carte plastique.

A cette fin, la machine de traitement de l'état de la technique comprend :
- un système d'approvisionnement qui permet d'alimenter en carte plastique vierge ladite machine de traitement, ce système d'approvisionnement peut être un système d'approvisionnement carte à carte ou un réservoir de plusieurs cartes muni d'un système de séparation de cartes,
- un système d'éjection qui permet d'éjecter chaque carte plastique de la machine de traitement après que ladite carte plastique a été traitée, et
- entre le système d'approvisionnement et le système d'éjection, un module de traitement qui peut comporter un module d'impression pour imprimer que la carte plastique et/ou un module d'encodage qui permet d'enregistrer des informations sur une puce de la carte plastique.

Pour protéger la carte plastique, un film de protection ou une couche de vernis est classiquement déposé sur la carte plastique. A cette fin, la machine de traitement comprend également entre le module de traitement et le système d'éjection, un module de laminage qui comporte un rouleau chauffant qui vient appliquer le film de protection/vernis par pression et chauffage sur la carte plastique.

Cette application à chaud entraîne une déformation de la carte plastique qui se courbe et la présence d'une telle déformation n'est pas souhaitable que ce soit d'un point de vue esthétique ou d'un point de vue fonctionnel.

Le document WO-A-2014/022088 divulgue une machine de traitement pour déposer une couche de protection sur une carte.

Un objet de la présente invention est de proposer une machine de traitement qui comporte un module de laminage qui limite la déformation de la carte plastique.

A cet effet, est proposée une machine de traitement prévue pour déposer un film de protection ou une couche de vernis sur une carte plastique, ladite machine de traitement comportant :
- un module de laminage comportant :
- un rouleau d'approvisionnement sur lequel est enroulée une bande portant le film de protection ou la couche de vernis à déposer,
- un rouleau de récupération sur lequel s'enroule la bande après que le film de protection ou la couche de vernis a été appliquée sur la carte plastique,
- un rouleau chauffant disposé entre le rouleau d'approvisionnement et le rouleau de récupération, et
- un contre-rouleau disposé contre le rouleau chauffant,
- un système d'introduction définissant avec le rouleau chauffant, un chemin de transfert amont le long duquel la carte plastique se déplace jusqu'au rouleau chauffant, et
- un système de retrait définissant avec le contre-rouleau, un chemin de transfert aval le long duquel la carte plastique se déplace depuis le contre-rouleau,
le centre du contre-rouleau étant en aval par rapport au centre du rouleau chauffant par rapport à une direction d'avancement de la carte plastique, et
le module de laminage comportant en outre un rouleau de contrainte disposé en travers du chemin de transfert aval.

Avantageusement, le module de laminage comporte un coulisseau sur lequel le contre-rouleau est monté, le coulisseau est monté mobile en translation le long d'une direction de translation parallèle au chemin de transfert amont, et, le coulisseau présente un système d'indexation configuré pour permettre le déplacement et le blocage du coulisseau dans différentes positions le long de la direction de translation.

Avantageusement, le module de laminage comporte un coulisseau sur lequel le rouleau de contrainte est monté, le coulisseau est monté mobile en translation le long d'une direction de translation perpendiculaire au chemin de transfert aval et présente un système d'indexation configuré pour permettre le déplacement et le blocage du coulisseau dans différentes positions le long de la direction de translation.

Les caractéristiques de l'invention mentionnées ci-dessus, ainsi que d'autres, apparaîtront plus clairement à la lecture de la description suivante d'un exemple de réalisation, ladite description étant faite en relation avec la Fig. unique qui est une représentation schématique en coupe d'une machine de traitement selon l'invention.

La Fig. unique montre une partie d'une machine de traitement 100. Comme pour une machine de traitement de l'état de la technique, la machine de traitement 100 selon l'invention comporte un système d'approvisionnement, un système d'éjection et entre le système d'approvisionnement et le système d'éjection, au moins un module de traitement comme par exemple un module d'impression et/ou un module d'encodage.

La machine de traitement 100 présente un chemin de transfert 102 le long duquel se déplace successivement chaque carte plastique 10 selon une direction d'avancement 20 de l'amont vers l'aval.

Le long du chemin de transfert 102, la machine de traitement 100 comporte un module de laminage 104 qui est prévu pour laminer un film de protection ou une couche de vernis sur chaque carte ayant subi le traitement (impression, encodage) et qui présente, en entrée, un système d'introduction 106 pour amener la carte plastique 10 dans le module de laminage 104, et en sortie, un système de retrait 108 pour sortir la carte plastique 10 du module de laminage 104.

Le système d'introduction 106 prend ici la forme de deux rouleaux disposés de part et d'autre du chemin de transfert 102 et dont l'un des deux est entraîné en rotation par un moteur, et le système de retrait 108 prend ici la forme de deux rouleaux disposés de part et d'autre du chemin de transfert 102 et dont l'un des deux est entraîné en rotation par un moteur.

Classiquement, la distance entre le système d'introduction 106 et le système de retrait 108 est inférieure à la longueur d'une carte plastique 10.

Le module de laminage 104 comporte :
- un rouleau d'approvisionnement 109 sur lequel est enroulée une bande 30 portant un film de protection ou une couche de vernis à déposer,
- un rouleau de récupération 110 sur lequel s'enroule la bande 30 après que le film de protection ou la couche de vernis a été appliqué sur la carte plastique 10,
- un rouleau chauffant 112 entre le rouleau d'approvisionnement 109 et le rouleau de récupération 110, et
- un contre-rouleau 114 disposé contre le rouleau chauffant 112.

Le chemin de transfert amont s'étend entre le système d'introduction 106 et le rouleau chauffant 112. Le chemin de transfert aval s'étend entre le contre-rouleau 114 et le système de retrait 108.

Le rouleau d'approvisionnement 109, le rouleau de récupération 110 et le rouleau chauffant 112 sont d'un même côté du chemin de transfert 102 tandis que le contre-rouleau 114 est disposé de l'autre côté du chemin de transfert 102.

La bande 30 s'étend à partir du rouleau d'approvisionnement 109 jusqu'au rouleau de récupération 110 en passant entre le rouleau chauffant 112 et le contre-rouleau 114.

D'une manière générale, lorsqu'une carte plastique 10 doit être recouverte d'un film de protection ou d'une couche de vernis, elle arrive par le système d'introduction 106, elle avance jusqu'au rouleau chauffant 112 et au contre-rouleau 114 où elle est pincée entre eux et dont l'un est entraîné en rotation par un moteur. La carte plastique 10 continue alors sa progression et reçoit en même temps le film de protection ou le vernis, jusqu'à ce qu'elle arrive au système de retrait 108 où elle sort du module de laminage 104.

Pour compenser la déformation de la carte plastique 10 sous l'effet de la chaleur du rouleau chauffant 112 :
- le centre du rouleau chauffant 112 et le centre du contre-rouleau 114 ne sont pas alignés sur une droite perpendiculaire au chemin de transfert amont, plus précisément, le centre du contre-rouleau 114 est en aval par rapport au centre du rouleau chauffant 112 par rapport à la direction d'avancement 20, et
- le module de laminage 104 comporte un rouleau de contrainte 116 qui est disposé en travers du chemin de transfert aval, c'est à dire que le rouleau de contrainte 116 se trouve sous le chemin de transfert aval obligeant ainsi la carte plastique 10 qui vient du rouleau chauffant 112 à s'écarter du chemin de transfert aval et donc à se déformer pour avancer.

Le déport entre les deux centres permet de dévier la carte plastique 10 en l'orientant ici vers le haut et la position du rouleau de contrainte 116 tend à orienter la carte dans la direction inverse, ici en la rabattant.

La distance entre le centre du contre-rouleau 114 et le centre du rouleau chauffant 112 est de préférence strictement supérieure à 0 et inférieure à 6 mm et plus particulièrement strictement supérieure à 0 et inférieure à 3 mm.

Dans la mesure où les dimensions et la qualité des cartes plastiques 10 utilisées peuvent varier, il est préférable que la position du contre-rouleau 114 par rapport au rouleau chauffant 112 puisse être modifiée, et/ou que la distance du centre du rouleau de contrainte 116 au chemin de transfert aval puisse être modifiée. Ces réglages peuvent être effectués par l'utilisateur de la machine de traitement 100.

Pour modifier la position du contre-rouleau 114 par rapport au rouleau chauffant 112, le module de laminage 104 comporte un coulisseau 118 sur lequel le contre-rouleau 114 est monté. Le coulisseau 118 est monté mobile en translation (double flèche 50) le long d'une direction de translation parallèle au chemin de transfert amont sur un châssis de la machine de traitement 100 et présente un système d'indexation configuré pour permettre le déplacement et le blocage du coulisseau 118 dans différentes positions le long de la direction de translation.

Le système d'indexation peut être par exemple un système classique de vis-écrou dont la vis est fixe en translation par rapport au châssis et dont l'écrou est solidaire du coulisseau 118. Ainsi, une rotation de la vis va entraîner le déplacement du coulisseau 118.

Pour modifier la distance du centre du rouleau de contrainte 116 au chemin de transfert aval, le module de laminage 104 comporte un autre coulisseau 120 sur lequel le rouleau de contrainte 116 est monté. L'autre coulisseau 120 est monté mobile en translation (double flèche 60) le long d'une autre direction de translation perpendiculaire au chemin de transfert aval sur le châssis de la machine de traitement 100 et présente un autre système d'indexation configuré pour permettre le déplacement et le blocage de l'autre coulisseau 120 dans différentes positions le long de l'autre direction de translation. L'autre système d'indexation peut être identique au système d'indexation déjà décrit. La position du rouleau de contrainte 116 doit cependant rester compatible avec le fait que lorsque la carte plastique 10 atteint ledit rouleau de contrainte 116, elle se trouve obligatoirement dirigée sous le rouleau de contrainte 116.

Pour éviter que la bande 30 se colle sur le rouleau chauffant 112 sur la périphérie amont de celui-ci, le module de laminage 104 présente un rouleau d'écartement 122 qui est disposé juste en amont du rouleau chauffant 112 et au niveau du chemin de transfert amont.

Pour que la pression entre le rouleau chauffant 112 et le contre-rouleau 114 reste sensiblement la même quelle que soit la position du contre-rouleau 114, au moins l'un parmi le rouleau chauffant 112 et le contre-rouleau 114 est monté sur le châssis par l'intermédiaire d'un système de suspension, par exemple du type ressort de compression.

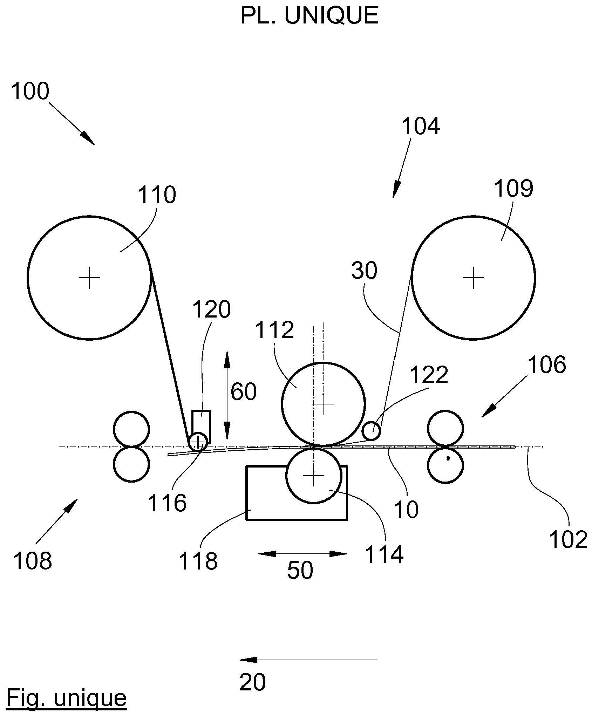

## Revendications

1. Machine de traitement (100) prévue pour déposer un film de protection ou une couche de vernis sur une carte plastique (10), ladite machine de traitement (100) comportant :
- un module de laminage (104) comportant :
- un rouleau d'approvisionnement (109) sur lequel est enroulée une bande (30) portant le film de protection ou la couche de vernis à déposer,
- un rouleau de récupération (110) sur lequel s'enroule la bande (30) après que le film de protection ou la couche de vernis a été appliqué sur la carte plastique (10),
- un rouleau chauffant (112) disposé entre le rouleau d'approvisionnement (109) et le rouleau de récupération (110), et
- un contre-rouleau (114) disposé contre le rouleau chauffant (112),
- un système d'introduction (106) définissant avec le rouleau chauffant (112), un chemin de transfert amont le long duquel la carte plastique (10) se déplace jusqu'au rouleau chauffant (112), et
- un système de retrait (108) définissant avec le contre-rouleau (114), un chemin de transfert aval le long duquel la carte plastique (10) se déplace depuis le contre-rouleau (114),
le centre du contre-rouleau (114) étant en aval par rapport au centre du rouleau chauffant (112) par rapport à une direction d'avancement (20) de la carte plastique (10), et
le module de laminage (104) comportant en outre un rouleau de contrainte (116) disposé en travers du chemin de transfert aval.

2. Machine de traitement (100) selon la revendication 1, **caractérisée en ce que** le module de laminage (104) comporte un coulisseau (118) sur lequel le contre-rouleau (114) est monté, **en ce que** le coulisseau (118) est monté mobile en translation le long d'une direction de translation parallèle au chemin de transfert amont, et, **en ce que** le coulisseau (118) présente un système d'indexation configuré pour permettre le déplacement et le blocage du coulisseau (118) dans différentes positions le long de la direction de translation.

3. Machine de traitement (100) selon l'une des revendications 1 ou 2, **caractérisée en ce que** le module de laminage (104) comporte un coulisseau (120) sur lequel le rouleau de contrainte (116) est monté, **en ce que** le coulisseau (120) est monté mobile en translation le long d'une direction de translation perpendiculaire au chemin de transfert aval et présente un système d'indexation configuré pour permettre le déplacement et le blocage du coulisseau (120) dans différentes positions le long de la direction de translation.

## Patentansprüche

1. Verarbeitungsmaschine (100), die vorgesehen ist, um eine Schutzfolie oder eine Lackschicht auf eine Plastikkarte (10) aufzubringen, wobei die Verarbeitungsmaschine (100) aufweist:
- ein Walzmodul (104), das aufweist:
- eine Beschickungsrolle (109), auf der ein Band (30) aufgewickelt ist, das die aufzubringende Schutzfolie oder Lackschicht trägt,
- eine Wiedergewinnungsrolle (110), auf die das Band (30) sich aufwickelt, nachdem die Schutzfolie oder die Lackschicht auf die Plastikkarte (10) aufgebracht wurde,
- eine Heizrolle (112), die zwischen der Beschickungsrolle (109) und der Wiedergewinnungsrolle (110) angeordnet ist, und
- eine Gegenrolle (114), die gegen die Heizrolle (112) angeordnet ist,
- ein Einführsystem (106), das mit der Heizrolle (112) einen stromaufwärtigen Übertragungsweg definiert, entlang dessen die Plastikkarte (10) sich bis zur Heizrolle (112) verschiebt, und
- ein Entnahmesystem (108), das mit der Gegenrolle (114) einen stromabwärtigen Übertragungsweg definiert, entlang dessen die Plastikkarte (10) sich von der Gegenrolle (114) aus verschiebt,
wobei die Mitte der Gegenrolle (114) sich stromabwärts von der Mitte der Heizrolle (112) bezüglich einer Vorschubrichtung (20) der Plastikkarte (10) befindet, und
das Walzmodul (104) außerdem eine Spannrolle (116) aufweist, die quer zum stromabwärtigen Übertragungsweg angeordnet ist.

2. Verarbeitungsmaschine (100) nach Anspruch 1, **dadurch gekennzeichnet, dass** das Walzmodul (104) einen Schlitten (118) aufweist, auf dem die Gegenrolle (114) montiert ist, dass der Schlitten (118) entlang einer Translationsrichtung parallel zum stromaufwärtigen Übertragungsweg translationsbeweglich montiert ist, und dass der Schlitten (118) ein Indexierungssystem aufweist, das konfiguriert ist, die Verschiebung und die Blockierung des Schlittens (118) in verschiedenen Stellungen entlang der Translationsrichtung zu erlauben.

3. Verarbeitungsmaschine (100) nach einem der Ansprüche 1 oder 2, **dadurch gekennzeichnet, dass** das Walzmodul (104) einen Schlitten (120) aufweist, auf dem die Spannrolle (116) montiert ist, dass der Schlitten (120) entlang einer Translationsrichtung lotrecht zum stromabwärtigen Übertragungsweg translationsbeweglich montiert ist und ein Indexierungssystem aufweist, das konfiguriert ist, die Verschiebung und die Blockierung des Schlittens (120) in verschiedenen Stellungen entlang der Translationsrichtung zu erlauben.

## Claims

1. Processing machine (100), designed to deposit a protective film or a layer of varnish on a plastic card (10), said processing machine (100) comprising:
- a lamination module (104) comprising:
- a supply roller (109) on which a band (30) carrying the protective film or the layer of varnish to be deposited is wound,
- a recovery roller (110) on which the band (30) is wound after the protective film or the layer of varnish has been applied to the plastic card (10),
- a heating roller (112) disposed between the supply roller (109) and the recovery roller (110), and
- a backing roller (114) disposed against the heating roller (112),
- an insertion system (106) defining, with the heating roller (112), an upstream transfer path along which the plastic card (10) moves as far as the heating roller (112), and
- a discharge system (108) defining, with the backing roller (114), a downstream transfer path along which the plastic card (10) moves from the backing roller (114),
the centre of the backing roller (114) being downstream with respect to the centre of the heating roller (112) with respect to a direction of travel (20) of the plastic card (10), and
the lamination module (104) further comprising a constraining roller (116) disposed across the downstream transfer path.

2. Processing machine (100) according to claim 1, **characterised in that** the lamination module (104) comprises a slide (118) on which the backing roller (114) is mounted, **in that** the slide (118) is mounted so as to be able to move in translation along a translation direction parallel to the upstream transfer path, and **in that** the slide (118) has a location system configured so as to allow the movement and locking of the slide (118) in various positions along the translation direction.

3. Processing machine (100) according to either claim 1 or claim 2, **characterised in that** the lamination module (104) comprises a slide (120) on which the constraining roller (116) is mounted, and **in that** the slide (120) is mounted so as to be able to move in translation along a translation direction perpendicular to the downstream transfer path and has a location system configured so as to allow the movement and locking of the slide (120) in various positions along the translation direction.
